Europäisches Patentamt

European Patent Office

Office européen des brevets

(11) Publication number: **0 153 030**
**B1**

## (12) EUROPEAN PATENT SPECIFICATION

(45) Date of publication of patent specification: **19.11.87**

(51) Int. Cl.⁴: **B 60 J 5/06**

(21) Application number: **85300484.4**

(22) Date of filing: **24.01.85**

(54) Van bodies.

(30) Priority: **03.02.84 GB 8402929**

(43) Date of publication of application:
**28.08.85 Bulletin 85/35**

(45) Publication of the grant of the patent:
**19.11.87 Bulletin 87/47**

(84) Designated Contracting States:
**DE FR GB NL**

(56) References cited:
**GB-A-2 016 067**
**GB-B-1 262 879**

(73) Proprietor: **BOALLOY LIMITED**
**Radnor Park Trading Estate West Heath**
**Congleton Cheshire CW12 4QA (GB)**

(72) Inventor: **Broadbent, Edward Gerald**
**91 Park Lane**
**Sandbach Cheshire, CW11 9EE (GB)**

(74) Representative: **Massey, Alexander et al**
**MARKS & CLERK Suite 301 Sunlight House Quay**
**Street**
**Manchester, M3 3JY (GB)**

Courier Press, Leamington Spa, England.

EP 0 153 030 B1

## Description

This invention relates to van bodies and especially to curtainsided van bodies. An example of a curtainsided van body to which the present invention may be applied is disclosed in our United Kingdom Patent Specifications Nos. B1 262 879 and B1 262 880 (the pre-characterizing part of Claim 1 is corresponding to the latter specification).

This invention is especially but not exclusively applicable to low-loader road vehicle van bodies or railway freight wagons.

Briefly, with curtainsided van bodies as disclosed in our aforesaid Patent Specifications, the curtain, when drawn across the open side of the van body to close same, is tensioned in the vertical plane by straps freely located in vertical sleeves in the curtain and secured at their tops to runners movable along an overhead track. Each strap at its bottom has a free tail portion out of the pocket threaded through eyelets and through a tensioning device or buckle the tail portion terminating in a rave-engageable hook.

With other curtainsided van bodies the straps do not pass through sleeves and in some instances are, for the majority of their length, integrated with the curtain by welding or stitching.

With low-loading van bodies (road or rail) it is awkward and sometimes difficult to engage the hooks on the rave and it is an object of the present invention to overcome this drawback.

According to the present invention there is provided a curtainsided van body comprising an open side closable by a curtain restrained at one end and movable across the open side to close same, the closed curtain being tensionable in the vertical plane by horizontally-spaced vertical straps having bottom tail portions which are threaded through tensioning devices or buckles and which terminate in hooks engageable with the van body rave or bottom rail, the van body being characterised in that the strap tail portions and hooks are passed through guiding means whereby they are restrained into contact with the curtain exterior such that, with the curtain in closed position, release of the tensioning devices allows the hooks to drop clear of the van body rave while engagement thereof elevates the hooks into securing abutment with the van body rave.

The strap tail and hook may, after passing through the tensioning device, be disposed in a lower sleeve in the curtain save for the rave-engaging poriton of the hook.

Alternatively, the hook and consequently the tail portion of the strap is restrained against the curtain by a short cross strap or bracket.

In both cases, the bottom edge of the curtain lies within the recess defined by the hook limbs.

With such arrangements, it is not necessary for the driver or cargo loader of a low-loading van body to bend down to ensure that the hook is aligned for engagement with the van body rave.

This is especially important with railway freight wagons where the rave or bottom rail will often be below platform or loading bay level.

If any slight misalignment does occur, the hook can be kicked back into proper alignment with the rave.

Embodiments of the present invention will now be described, by way of example, with reference to the accompanying drawings, in which:—

Fig. 1 is a diagrammatic perspective view of low loader curtainsided road vehicle embodying the invention,

Fig. 2 is a detail perspective view of one corner of the road vehicle, and

Figs. 3 and 4 are respectively front and side views of the invention applied to a railway freight wagon.

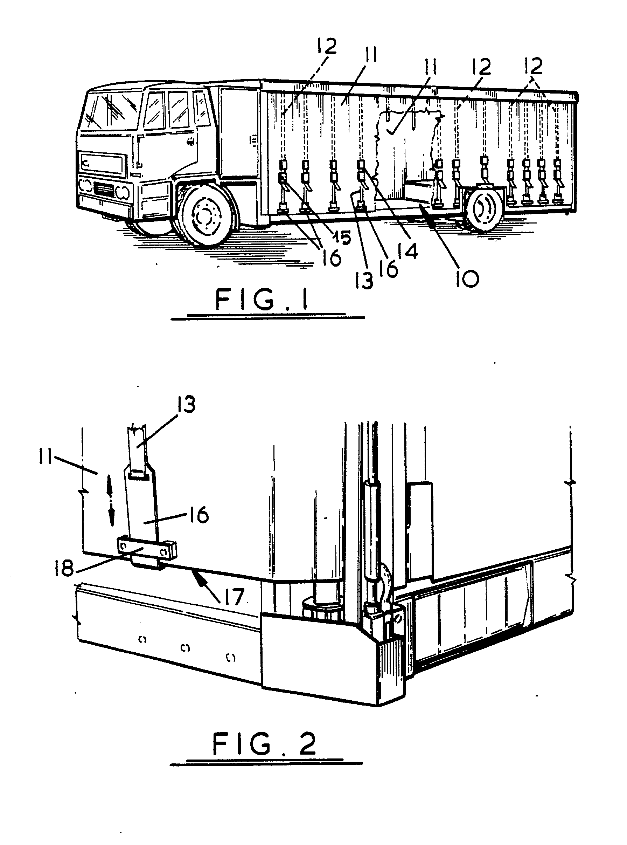

In Figs. 1 and 2, the road vehicle has a low-loading van body 10 closed along two parallel lateral sides by curtains 11.

Each curtain 11, when in the closed position, is constrained or tensioned in the vertical plane by horizontally-spaced strap 12 contained freely in sleeves in the curtain 11 and having a tail portion 13 passing out of the pocket through eyelets 14 for threading through a tensioning buckle 15, the tail portion terminating in a hook 16 for engaging the van body rave.

The bottom edge 17 of the curtain 11 lies within the recess of each hook 16 and the latter is held against the curtain exterior by a short cross strap or bracket 18 which does not prevent limited vertical movement of the hook 16 relative to the curtain 11.

When the curtain 11 is in closed position the hook 16 engages the bottom edge 17 of the curtain and the rave. When the tensioning buckle 15 is released the tail portion 13 is relaxed and the hook 16 drops downwards to space itself clear of the bottom edge of the rave without complete disengagement therefrom. Tensioning of the buckle 15 tensions tail portion 13 and pulls the hook 16 up against the bottom edge of the rave.

Thus with a low-loader van body the driver does not need to bend down to engage the hooks on the rave.

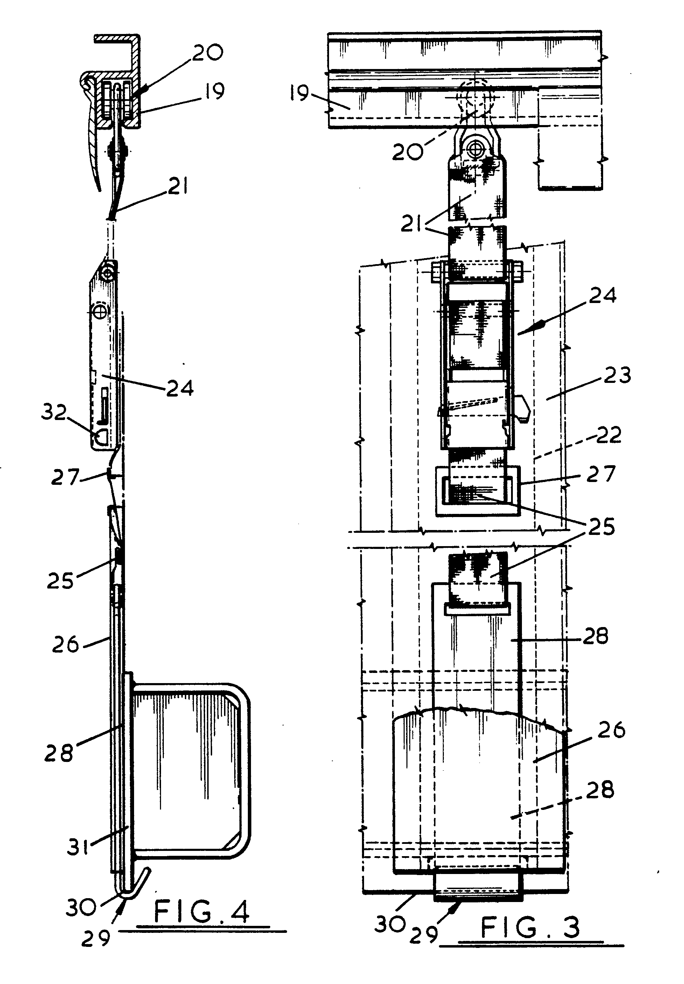

In Figs. 3 and 4, the curtainsided railway freight wagon has a top track 19 along which can move rollers 20 each secured to the top of a strap 21 which freely passes down a sleeve 22 in the curtain 23, the strap 21 passing out of the sleeve 22 and being threaded through a tensioning buckle 24.

In this instance, the tail portion 25 is threaded back into a lower sleeve 26 through an eyelet 27 and is secured to a long hook 28 also contained within the lower sleeve 26 save for its bottom hooked portion 29 which engages the bottom edge 30 of the curtain 23 and the bottom edge of the wagon rave 31.

This arrangement operates in the same manner as that of Figs. 1 and 2.

Apertures 32 are provided on the tensioning buckle 24 to allow threading therethrough of a customs seal cord, wire or similar.

## Claims

1. A curtainsided van body (10) comprising an open side closable by a curtain (11) restrained at one end and movable across the open side to close same, the closed curtain (11) being tensionable in the vertical plane by horizontally-spaced vertical straps (12) having bottom tail portions (13) which are threaded through tensioning devices or buckles (15) and which terminate in hooks (16) engageable with the van body rave (31) or bottom rail, the van body (10) being characterised in that the strap tail portions (13) and hooks (16) are passed through guiding means (18, 22) whereby they are restrained into contact with the curtain exterior such that, with the curtain in closed position, release of the tensioning devices (15) allows the hooks (16) to drop clear of the van body rave (31) while engagement thereof elevates the hooks (16) into securing abutment with the van body rave (31).

2. A curtainsided van body (10) as claimed in claim 1, in which the strap tail (13) and hook (16), after passing through the tensioning device (15), be disposed in a lower sleeve (22) in the curtain save for the rave-engaging portion of the hook (16).

3. A curtainsided van body (10) as claimed in claim 1, in which the hook (16) and consequently the tail portion (13) of the strap (12) is restrained against the curtain by a short cross strap or bracket (18).

## Patentansprüche

1. Lastkraftwagen-Kastenaufbau (10) mit Plane, mit einer offenen Seite, die mit einer Plane (11) schließbar ist, die an einem Ende festgehalten und quer über die offene Seite bewegbar ist, um diese zu schließen, wobei die geschlossene Plane (11) in der vertikalen Ebene mit horizontal beabstandeten vertikalen Gurten (12) spannbar ist, die untere Endstücke (13) aufweisen, welche durch Spanneinrichtungen oder Schnallen (15) hindurchgeführt sind und die in Haken (16) enden, welche mit einem Seitenbrett (31) an der Ladefläche des LKW-Kastenaufbaus oder einer unteren Schiene in Eingriff bringbar sind, wobei der LKW-Kastenaufbau (10) dadurch gekennzeichnet ist, daß die Gurtendstücke (13) und die Haken (16) durch Führungen (18, 22) hindurchgeführt sind, wodurch sie in Kontakt mit der Außenseite der Plane gehalten sind, so daß dan, wenn die Plane sich in Schließstellung befindet, das Lösen der Spanneinrichtungen (15) es den Haken (16) ermöglicht, frei von dem Seitenbrett (31) an der Ladefläche des LKW-Kastenaufbaus zu fallen, während ihr Eingriff die Haken (16) in Befestigungsanlage gegen das Seitenbrett (31) an der Ladefläche des LKW-Kastenaufbaus nach oben bewegt.

2. Lastkraftwagen-Kastenaufbau (10) mit Plane nach Anspruch 1, wobei das Gurtende (13) und der Haken (16), nach dem Durchgang durch die Spanneinrichtung (15), in einer unteren Hülse (22) in dem Planenfänger für den Teil des Hakens (16) in Eingriff mit dem Seitenbrett angeordnet sind.

3. Lastkraftwagen-Kastenaufbau (10) mit Plane nach Anspruch 1, wobei der Haken (16) und infolgedessen das Endstück (13) des Gurtes (12) gegen die Plane mit einem kurzen Quergurt oder einer Klammer (18) festgehalten sind.

## Revendications

1. Caisse de fourgon (10) à paroi rideau, comprenant un côté ouvert pouvant être fermé par un rideau (11) encastré à une extrêmité et déplaçable le long du côté ouvert pour fermer celui-ci, le rideau (11) pouvant être tendu dans le plan vertical par des attaches (12) verticales espacées horizontalement ayant des parties de queue (13) qui sont enfilées à travers des dispositifs ou boucles de serrage (15) et qui se terminent par des crochets (16) pouvant s'accrocher dans la paroi latérale (3) de la caisse ou dans un rail inférieur, le corps de fourgon (10) étant caractérisé en ce que les parties de queue (13) des attaches et les crochets (16) passent à travers des moyens de guidage (18, 22) qui permettent de les serrer contre l'extérieur du rideau, de façon que, lorsque le rideau est en position fermée, le desserrage des dispositifs de serrage (15) permet au crochet (16) de dégager la paroi latérale (31) de la caisse de fourgon, tandis que l'accrochage de cette paroi soulève les crochets (16) en contact de fixation avec la paroi latérale (31) de la caisse de fourgon.

2. Caisse de fourgon (10) à paroi rideau selon la revendication 1, dans laquelle la queue d'attache (13) et le crochet (16), après passage à travers le dispositif de serrage (15), sont disposés dans une gaine inférieure (22) du rideau, excepté la partie du crochet (16) venant s'accrocher dans la paroi latérale.

3. Caisse de fourgon (10) à paroi rideau selon la revendication 1, dans laquelle le crochet (16) et donc la partie de queue (13) de l'attache (12) est serrée contre le rideau au moyen d'un étrier ou patte (18) transversal et court.

FIG. 1

FIG. 2

1

FIG.4

FIG.3